# EUROPEAN PATENT APPLICATION

(11) **EP 1 202 185 A2**
(43) Date of publication of application: **02.05.2002**
(21) Application number: 01480029.6
(22) Date of filing: 24.04.2001
(51) Int. Cl.: G06F 17/24, G06F 17/60

(54) **Method and system in an electronic spreadsheet for persistently copy-pasting a source range of cells onto one or multiple destination ranges of cells**

(30) Priority: 24.10.2000 EP 00480097
(71) Applicant: International Business Machines Corporation, Armonk, N.Y. 10504 (US)
(72) Inventor: Bauchot, Frederic, 06640 Saint Jeannet (FR)
(74) Representative: Etorre, Yves Nicolas

(57) **Abstract**

The present invention discloses a system and method for persistently copying and pasting a source range of cells onto one or multiple destination ranges of cells, in a multi dimensional spreadsheet comprising a plurality of cells identified by a cell address along each dimension, a range of cells comprising one or a plurality of cells. The method comprises the steps of:
- performing a persistent copy operation, said operation comprising the steps of:
   - selecting a source range of cells;
   - copying the source reference range of cells onto a buffer;
- performing a persistent paste operation, said operation comprising the steps of:
   - selecting one or a plurality of cells a destination range of cells;
   for each selected destination range of cells:
   - copying the content of said buffer onto the selected destination range of cells;
   - associating the source range of cells with the destination range of cells;
- automatically performing a copy operation each time the source range of cells is updated, said operation comprising the steps of:
   - determining whether the source range of cells is associated with one or a plurality of destination range of cells;
   If the source range of cells is associated with one or a plurality of destination range of cells:
   - copying the source range of cells onto the one or plurality of associated destination range of cells.

## Description

### Technical field of the invention

The present invention relates to the field of information processing by digital computers, and more particularly to a method and system, in an electronic spreadsheet, for persistently copy-pasting a source range of cells onto one or multiple destination ranges of cells.

### Background art

Before computers, numerical analyses, particularly financial ones, were usually prepared on an accountant's columnar pad or spreadsheet, with pencil and calculator in hand. By organising data into columns and rows, spreadsheets afford the rapid assimilation of information by a reader. The task of preparing a spreadsheet on paper, however, is not quite so fast. Instead, the process tends to be very slow, as each entry must be tediously calculated and entered into the spreadsheet. Since all calculations are the responsibility of the preparer, manually prepared spreadsheets are also prone to errors. Hence, preparation of spreadsheets by hand is slow, tedious, and unreliable.

With the advent of microcomputers, a solution was forthcoming in the form of "electronic spreadsheets." Better known simply as "spreadsheets," these software programs provide a computerised replacement for the traditional financial modelling tools: the accountant's columnar pad, pencil, and calculator. In some regards, spreadsheet programs are to those tools what word processors are to typewriters. Spreadsheets offer dramatic improvements in ease of creating, editing, and using financial models.

A typical spreadsheet program configures the memory of a computer to resemble the column/row or grid format of an accountant's columnar pad, thus providing a visible calculator for a user. Because this "pad" exists dynamically in the computer's memory, however, it differs from paper pads in several important ways. Locations in the electronic spreadsheet, for example, must be communicated to the computer in a format which it can understand. A common scheme for accomplishing this is to assign a number to each row in a spreadsheet, a letter to each column, and another letter to each sheet (or page) of the spreadsheet. To reference a location at column A and row 1 of the second page (i.e., the upper-left hand corner), for example, the user types in "B:A1". In this manner, the spreadsheet defines an addressable storage location or "cell" at each intersection of a row with a column within a given page.

Data entry into an electronic spreadsheet occurs in much the same manner that information would be entered on an accountant's pad. After a screen cursor is positioned at a desired location, the user can enter alphanumeric information. Besides holding text and numeric information, however, spreadsheet cells can store special instructions or "formulas" specifying calculations to be performed on the numbers stored in spreadsheet cells. Such spreadsheet cells can also be defined and named as a range as long as they are arranged as a connex set of cells. A typical example of such a named range simply corresponds to a regular table found in an accountant's pad. In this fashion, range names can serve as variables in an equation, thereby allowing precise mathematical relationships to be defined between cells. The structure and operation of a spreadsheet program, including advanced functions such as functions and macros, are documented in the technical, trade, and patent literature.

Electronic spreadsheets offer many advantages over their paper counterparts. For one, electronic spreadsheets are much larger (i.e., hold more information) than their paper counterparts; electronic spreadsheets having thousands or even millions of cells are not uncommon. Spreadsheet programs also allow users to perform "what-if" scenarios. After a set of computational relationships has been entered into a worksheet, thanks to imbedded formulas for instance, the spread of information can be recalculated using different sets of assumptions, with the results of each recalculation appearing almost instantaneously. Performing this operation manually, with paper and pencil, would require recalculating every relationship in the model with each change made. Thus, electronic spreadsheet systems were invented to solve "what-if' problems, that is, changing an input and seeing what happens to an output.

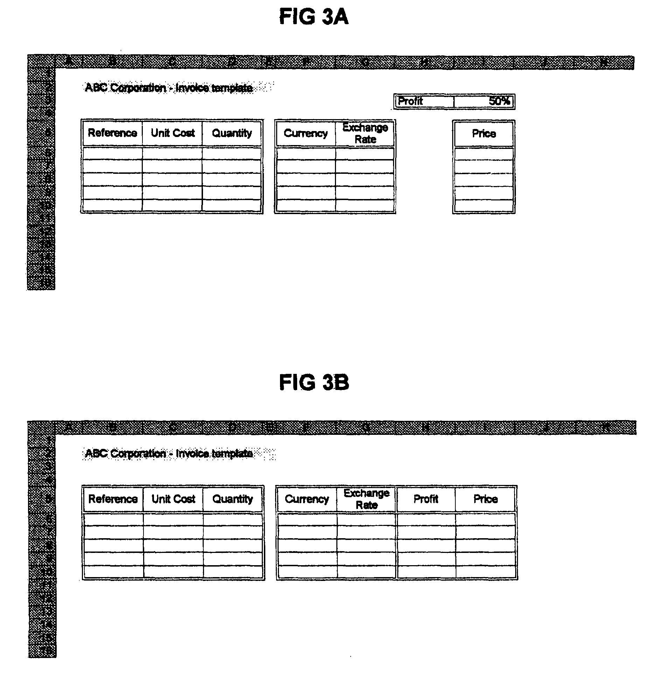

Cell ranges are used to automate computations in spreadsheets. Whether cells or cell ranges are named or not, they can be referenced within a formula either by a "relative" or an "absolute" reference. Such a reference can be the address of the referenced cell range, or the name of the referenced cell range if it turns that this cell range is named.
It is common to find in electronic spreadsheet based applications some large tables which are organised according to a structured way. This structure typically results in organising rows, columns and sheets in such a way that the content of each cell within a given column and within a given sheet can be obtained as the result of a copy-paste operation where the source copied cell is the top cell within this same column and same sheet. In such typical situations, this "reference" cell can contain a formula referencing in a relative or absolute way one or several other cells, so that each of the other cells within the same column of the same sheet will also contain the same formula where the absolute references will be kept unchanged and where the relative references will point to other relative cells. Such a typical situation is illustrated in FIG **3A** where a table is used to compute a sales item price according to some input data. In this table, the content of the cell with address C6 (column entitled "Unit Cost") is for instance equal to formula "@CostOf(B6)" where @CostOf is a dedicated function providing the cost of an item used as parameter. In the same table, the content of the cell with address G6 (column entitled "Exchange rate") is for instance equal to formula "@RateOf(F6)" where @RateOf is a dedicated function returning the exchange rate for a currency passed as parameter. In the same table, the content of the cell with address I6 (column entitled "Price") is for instance equal to formula "C6*D6*G6/(1-$PROFIT)" where "PROFIT" is the name given to the cell range with address I3 where the profit figure is recorded. The content of each cell within the "Unit Cost" table can be obtained by copy-pasting the reference cell with address C6, so that the content of the cell with address Cx (where x takes the values 7 to 10) is equal to "@CostOf(Bx)". Similarly, the content of the cells with address Gx and with address Ix are obtained by respectively copy-pasting the content of the reference cells with address G6 and with address I6. The content is equal respectively to "@RateOf(Fx)" and to "Cx*Dx*Gx/(1-$PROFIT)". The copy-paste operation is thus a powerful tool for copying in many different cells or ranges of cells, the content of a reference cell or of a reference range of cells. Nevertheless this copy-paste operation presents some limitations, as outlined hereafter.
Let assume that in our example the content of a reference cell needs to be updated to reflect some structural change of the table it belongs to. This structural change is illustrated in FIG **3B** where the profit parameter (used to derive a price from a cost) is no longer constant for all sold items (as shown in FIG **3A** with the cell of address I3, and named "PROFIT"), but depends on the sold item itself, as represented in the table by the cells within the column entitled "Profit". Under this new rule, the content of the cell with address I6 (within the column entitled "Price") is now equal to formula "C6*D6*G6/(1-H6)". As the reference cell I6 for the "Price" column has been changed, for reflecting the table structural update, it is necessary to reapply the copy-paste operation from this reference cell to all the other cells following the same logic, that is the cells with address I7 to I10 as shown in FIG **3B**. More generally, this operation must be carefully done each time a reference range of cells content is updated and must be applied to every range of cells whose content has been initially derived from the content of the reference range of cells through a copy-paste operation. With large and complex spreadsheets, such an operation may take quite a long time and is error prone because the spreadsheet user may miss some of the ranges of cells where the copy-paste operation must be reapplied. If it is the case, then the resulting spreadsheet may provide erroneous results. The present invention offer a powerful and efficient solution to this problem by defining a method and a system for persistently performing a copy-paste operation between a reference range of cell and one or multiple destination ranges of cells.

### Summary of the invention

The present invention relates to the field of information processing by digital computers, and more particularly to a method and system for persistently copying and pasting a source range of cells onto one or multiple destination ranges of cells, in a multi dimensional spreadsheet comprising a plurality of cells identified by a cell address along each dimension, a range of cells comprising one or a plurality of cells. The method comprises the steps of:
- performing a persistent copy operation, said operation comprising the steps of:
   - selecting a source range of cells;
   - copying the source reference range of cells onto a buffer;
- performing a persistent paste operation, said operation comprising the steps of:
   - selecting one or a plurality of cells a destination range of cells;
   for each selected destination range of cells:
   - copying the content of said buffer onto the selected destination range of cells;
   - associating the source range of cells with the destination range of cells;
- automatically performing a copy operation each time the source range of cells is updated, said operation comprising the steps of:
   - determining whether the source range of cells is associated with one or a plurality of destination range of cells;
   If the source range of cells is associated with one or a plurality of destination range of cells:
   - copying the source range of cells onto the one or plurality of associated destination range of cells.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure **1A** is a schematic view of a computer system in which the present invention may be embodied.
- Figure **1B** is a schematic view a software system including an operating system, an application software, and a user interface for carrying out the present invention.
- Figure **1C** illustrates the basic architecture and functionality of a graphical user interface in which the present invention may be embodied.
- Figure **2A** shows a spreadsheet notebook interface according to the preferred embodiment of the present invention.
- Figure **2B** shows the toolbar component of the notebook interface shown in Figure **2A.**
- Figures **2C** and **2D** show page identifiers for rapidly accessing and manipulating individual pages of the notebook interface shown in Figure **2A.**
- Figures **3A** and **3B** illustrate a typical spreadsheet structure used in the preferred embodiment of the present invention.
- Figure **4** illustrates the structure of the persistent copy-paste table, according to the preferred embodiment of the present invention.
- Figures **5A, 5B, 5C** illustrate a preferred spreadsheet user interface for invoking the persistent copy-paste operation, according to the present invention.
- Figure **6** is a flow chart illustrating a preferred method for performing a persistent copy operation on a source reference range on cells, according to the present invention.
- Figure **7** is a flow chart illustrating a preferred method for performing a persistent paste operation on a destination range of cells, according to the present invention.
- Figure **8** is a flow chart illustrating a preferred method for automatically performing a persistent copy-paste operation from a source reference ranges on cells onto multiple destination ranges of cells, upon modification of the content of the source reference range of cells, according to the present invention.
- Figure **9** is a flow chart illustrating a preferred method for automatically handling the deletion of a source reference ranges on cells, according to the present invention.
- Figure **10** is a flow chart illustrating a preferred method for automatically handling the deletion or the content update of a destination range on cells, according to the present invention.

### Detailed description of the preferred embodiment

### SYSTEM HARDWARE

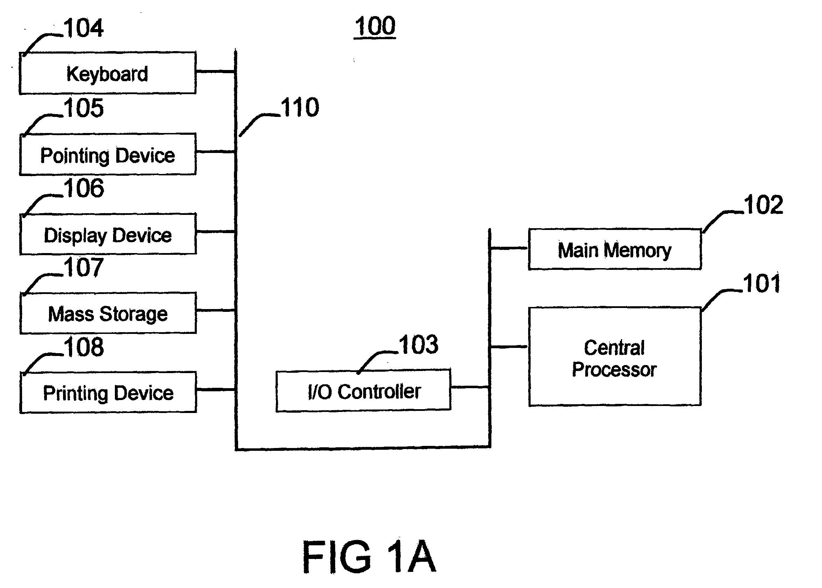

As shown in FIG. **1A,** the present invention may be embodied on a computer system **100** comprising a central processor **101,** a main memory **102,** an input/output controller **103,** a keyboard **104**, a pointing device **105** (e.g., mouse, track ball, pen device, or the like), a display device **106**, and a mass storage **107** (e.g., hard disk). Additional input/output devices, such as a printing device **108**, may be included in the system **100** as desired. As illustrated, the various components of the system **100** communicate through a system bus **110** or similar architecture. In a preferred embodiment, the computer system **100** includes an IBM-compatible personal computer, which is available from several vendors (including International Business Machine - IBM Corporation of Armonk, N.Y.).

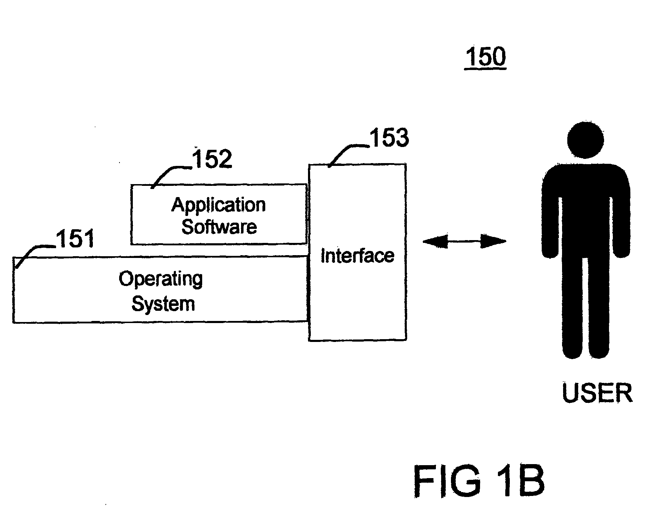

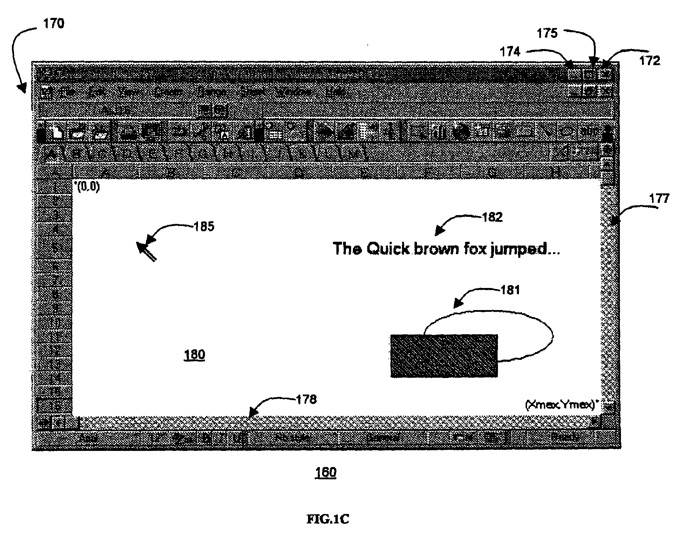

Illustrated in FIG. **1B,** a computer software system **150** is provided for directing the operation of the computer system **100.** Software system **150,** which is stored in system memory **102** and on disk memory **107,** includes a kernel or operating system **151** and a shell or interface **153.** One or more application programs, such as application software **152,** may be "loaded' (i.e., transferred from storage **107** into memory **102**) for execution by the system **100.** The system **100** receives user commands and data through user interface **153;** these inputs may then be acted upon by the system **100** in accordance with instructions from operating module **151** and/or application module **152.** The interface **153,** which is preferably a graphical user interface (GUI), also serves to display results, whereupon the user may supply additional inputs or terminate the session. In a preferred embodiment, operating system **151** and interface **153** are Microsoft Win95, available from Microsoft Corporation of Redmond, Wash. Application module **152**, on the other hand, includes a spreadsheet notebook of the present invention as described in further detail herein below.

### INTERFACE

### A. Introduction

The following description will focus on the presently preferred embodiments of the present invention, which are embodied in spreadsheet applications operative in the Microsoft Win95 environment. The present invention, however, is not limited to any particular application or any particular environment. Instead, those skilled in the art will find that the system and methods of the present invention may be advantageously applied to a variety of system and application software, including database management systems, word processors, and the like. Moreover, the present invention may be embodied on a variety of different platforms, including Macintosh, UNIX, NextStep, and the like. Therefore, the description of the exemplary embodiments which follows is for purposes of illustration and not limitation.

Referring now to FIG. **1C,** the system **100** includes a windowing interface or workspace **160.** Window **160** is a rectangular, graphical user interface (GUI) for display on screen **106;** additional windowing elements may be displayed in various sizes and formats (e.g., tiled or cascaded), as desired. At the top of window **160** is a menu bar **170** with a plurality of user-command choices, each of which may invoke additional submenus and software tools for use with application objects. Window **160** includes a client area **180** for displaying and manipulating screen objects, such as graphic object **181** and text object **182.** In essence, the client area is a workspace or viewport for the user to interact with data objects which reside within the computer system **100.**

Windowing interface **160** includes a screen cursor or pointer **185** for selecting and otherwise invoking screen objects of interest. In response to user movement signals from the pointing device **105,** the cursor **185** floats (i.e., freely moves) across the screen **106** to a desired screen location. During or after cursor movement, the user may generate user-event signals (e.g., mouse button "clicks" and "drags") for selecting and manipulating objects, as is known in the art. For example, Window **160** may be closed, re-sized, or scrolled by "clicking" (selecting) screen components **172, 174/5,** and **177/8,** respectively.

In a preferred embodiment, screen cursor **185** is controlled with a mouse device. Single-button, double-button, or triple-button mouse devices are available from a variety of vendors, including Apple Computer of Cupertino, Calif., Microsoft Corporation of Redmond, Wash., and Logitech Corporation of Fremont, Calif., respectively. More preferably, screen cursor control device **105** is a two-button mouse device, including both right and left "mouse buttons."

Programming techniques and operations for mouse devices are well documented in the programming and hardware literature; see e.g., *Microsoft Mouse Programmer's Reference,* Microsoft Press, 1989. The general construction and operation of a GUI event-driven system, such as Windows, is also known in the art: see, e.g., Petzold, C., *Programming Windows,* Second Edition, Microsoft Press, 1990. The disclosures of each are hereby incorporated by reference.

### B. Preferred interface

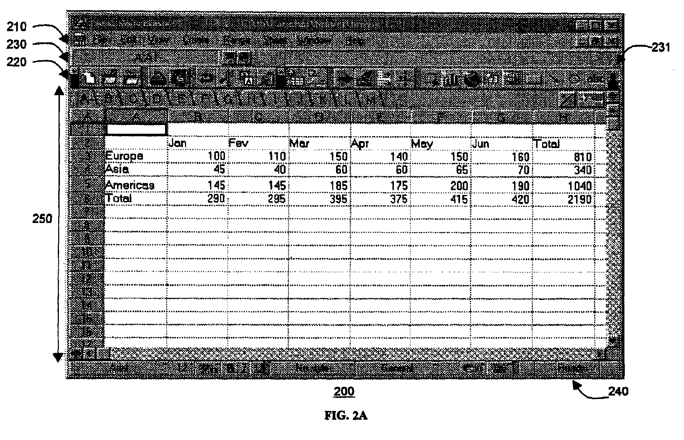

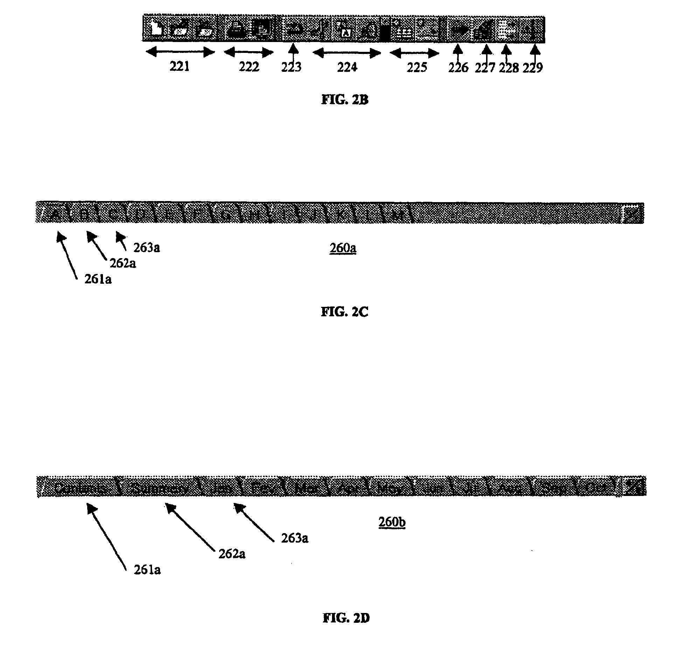

Shown in FIG. 2**A,** a spreadsheet notebook interface of the present invention will now be described The spreadsheet notebook or workbook of the present invention includes a notebook workspace **200** for receiving, processing, and presenting information, including alphanumeric as well as graphic information. Notebook workspace **200** includes a menu bar **210,** a toolbar **220,** a current cell indicator **230,** an input line **231,** a status line **240,** and a notebook window **250.** The menu bar **210** displays and invokes, in response to user inputs, a main level of user commands. Menu **210** also invokes additional pull down menus, as is known in windowing applications. Input line **231** accepts user commands and information for the entry and editing of cell contents, which may include data, formulas, macros, and the like. Indicator **230** displays an address for the current cursor (i.e., active cell) position, or the address or name of a selected named range (i.e. active selection). At the status line **240**, system **100** displays information about the current state of the workbook; for example, a "READY" indicator means that the system is ready for the user to select another task to be performed.

The toolbar **220**, shown in further detail in FIG. 2**B**, comprises a row or palette of tools which provide a quick way for the user to choose commonly-used menu commands or properties. In an exemplary embodiment, toolbar **220** includes file manipulation buttons **221,** printing buttons **222,** an undo button **223,** cut, copy, and paste buttons **224,** information pop-up window buttons tool **225,** a named range selection button **226,** a style copy button **227,** a column re-sizing button **228,** and a sum button **229.** The functions of these buttons are suggested by their names. For instance, buttons **224** cut, copy and paste data and objects to and from Windows' clipboard. The same actions are also available as corresponding commands in the Edit menu (available from menu bar **210**).

The notebook, which provides an interface for entering and displaying information of interest, includes a plurality of spreadsheet pages. Each page may include conventional windowing features and operations, such as moving, re-sizing, and deleting. In a preferred embodiment, the notebook includes 256 spreadsheet pages, all of which are saved as a single disk file on the mass storage **107.** Workspace **200** may display one or more notebooks, each sized and positioned (e.g., tiled, overlapping, and the like) according to user-specified constraints.

Each spreadsheet page of a notebook includes a 2-D spread. Page A from the notebook **200**, for example, includes a grid in row and column format, such as row 3 and column F. At each row/column intersection, a box or cell (e.g., cell **C4**) is provided for entering, processing, and displaying information in a conventional manner. Each cell is addressable, with a selector being provided for indicating a currently active one (i.e., the cell that is currently selected).

As shown in FIGS. **2C-D,** individual notebook pages are identified by page identifiers **260,** preferably located along one edge of a notebook. In a preferred embodiment, each page identifier is in the form of a tab member (e.g., members **261a, 262a, 263a**) situated along a top edge of the notebook. Each tab member may include representative indicia, such as textual or graphic labels, including user selected titles representing the contents of a corresponding page. In FIG. **2C,** the tab members **260** are set to their respective default names. For example, the first three tab members (members **261a, 262a, 263a**) are respectively set to A, B, and C. Tab members are typically given descriptive names provided by the user, however. As shown in FIG. **2D,** for example, the first three tab members have now been set to "Contents" (tab member **261b**), "Summary" (tab member **262b**), and "Jan" (tab member **263b**). In a similar manner, the remaining tabs are set to subsequent months of the year. In this manner, the user associates the page identifiers with familiar tabs from an ordinary paper notebook. Thus, the user already knows how to select a page or spread of interest: simply select the tab corresponding to the page (as one would do when selecting a page from a paper notebook).

In addition to aiding in the selection of an appropriate page of information, the user-customizable page identifiers serve aid in the entry of spreadsheet named range addresses. For example, when entering a formula referring to a named range of cells on another page, the user may simply use the descriptive page name in the named range address, thus making it easier for the user to understand the relationship of the cell(s) or information being referenced.

A general description of the features and operation of the spreadsheet notebook interface may be found in Quattro Pro for Windows *(Getting Started, User's Guide and Building Spreadsheet Applications)*, available from Borland International.

### PERSISTENT COPY-PASTE OPERATION

### A. Introduction

As the power of spreadsheet environments has increased since several years, it is today possible to develop complex custom applications solely based on spreadsheets, as opposed to applications developed with general purpose programming languages like C++ or VisualBasic from Microsoft Corporation. This can be achieved thanks to the spreadsheet imbedded tools such as macro languages, script languages and formulas. In large spreadsheets, it is common to find structured tables where the content of some cells are directly derived from the contents of other cells thanks to formulas which translate the relationship between these cells. Such formulas can be quite complex, so that it is advantageous to copy-paste such a formula, once established, from a reference cell onto all the other cells where the same relationship exists. If this relationship evolves during the life of a spreadsheet, then the spreadsheet user must first update the reference cell content (typically rewriting the formula it holds), and then the spreadsheet user must again perform a copy-paste operation between this source cell and all the cells whose content was previously obtained from the reference cell content with a copy-paste operation. Besides the time spent by the user spreadsheet to perform this operation, there is a risk for performing this new copy-paste operation to the wrong set of cells: either some cells deserving to be again copy-pasted may be missed, or some cells may be copy-pasted while they should not. In both cases, the resulting spreadsheet has been wrongly updated, so that it provides wrong computed results.

The present invention offer a user-friendly solution to this problem by defining a method and system allowing to persistently perform a copy-paste operation between a source reference range of cells and one or multiple destination ranges of cells.

### B. Improved copy-paste manager

In contrast to just-described conventional tools, the present invention provides a more powerful, user-friendly and interactive approach for performing copy-paste operations in a form of a copy-paste manager. The manager automatically allows the spreadsheet user to specify:
- if a copy-paste operation between a source reference range of cells and one or multiple destination ranges of cells must be done once, or
- if the effect of a copy-paste operation between a source reference range of cells and one or multiple destination ranges of cells must persist after the operation, and
- if the persistent relationship between the source reference range of cells and one or multiple destination ranges of cells must be broken.
For more clarity, source reference ranges of cells which can take advantage of the present invention will be called *"persistently clonable"* ranges of cells, and destination ranges of cells which can take advantage of the present invention will be called *"persistently cloned"* ranges of cells.

### C. Persistently clonable / cloned ranges of cells

In a preferred embodiment, persistently clonable and persistently cloned ranges of cells can be easily identified on the display device **106** within the work area **180** of the window **160** by using some specific cell attributes, such as a font style or font colour or background colour or border line style or border line colour or background pattern, etc... In a preferred embodiment, the background pattern of a persistently clonable range of cells is set to a first pattern value referred to as PATTERN_COPY while the background pattern of a persistently cloned range of cells is set to a second pattern value referred to as PATTERN_PASTE. Furthermore if a range of cells is the last one being persistently copied (this range of cells being referred to as the active persistently clonable range of cells), then its background pattern is set to a third value referred to as PATTERN_COPY_BLINK corresponding in fact to the same pattern as those with value PATTERN_COPY, but in blinking mode.

### D. Scenario

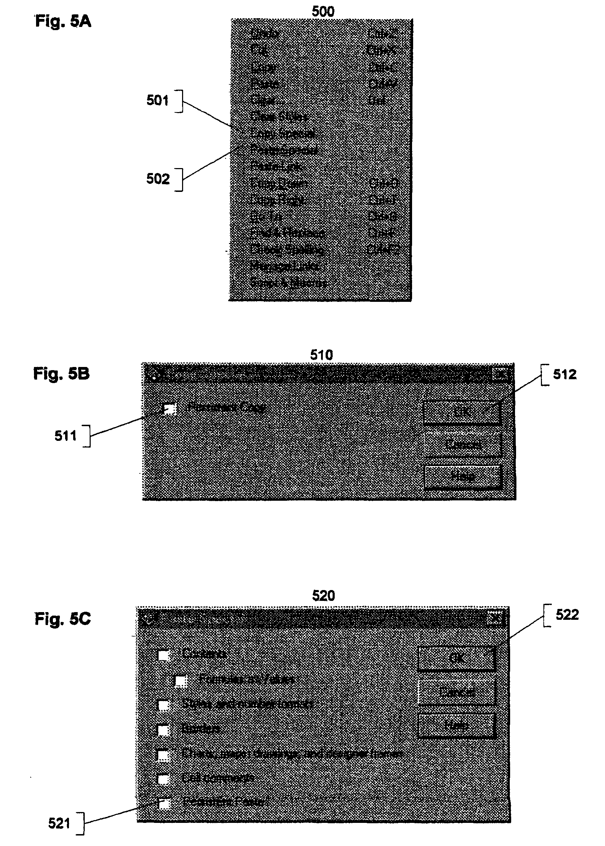

In a preferred embodiment, the present invention can be used in tow steps :
- The first step occurs when the spreadsheet user decides, based on some criteria not developed here, whether a copy-paste operation performed between a source reference range of cells and one or multiple destination ranges of cells deserves to take advantage of the copy-paste manager or not.
   - If it is the case, the spreadsheet user follows in sequence the following steps.
      - First the spreadsheet user selects the relevant source reference range of cells by using conventional means such as (but not limited to) the pointing device **105** or the keyboard **104.**
      - Then the spreadsheet user invokes an extension of the regular copy operation thanks to conventional means available in spreadsheet environment, such as (but not limited to) dedicated push-buttons, keyboard entry short cuts, menu or sub menu entries. This extension of the regular copy operation corresponds to a specific command called ***"Persistent_Copy".*** In a preferred embodiment of the present invention, this ***Persistent_Copy*** command is invoked by clicking with the pointing device **105** first on a menu entry **501** "Copy Special" within the conventional "Edit" menu **500** of an electronic spreadsheet, as shown in FIG **5A,** then on a specific check box **511** "Persistent Copy" present within a specific new dialog box "Copy Special" **510** as shown in FIG **5B,** and then on the "OK" push-button **512** available within this same dialog box "Copy Special" **510.** At completion of the ***Persistent_Copy*** command, the background pattern of the source reference range of cells is set to the value PATTERN_COPY_BLINK, reflecting that it is now the active persistently clonable range of cells.
      - Then the spreadsheet user selects the relevant destination ranges of cells by using conventional means, such as (but not limited to) the pointing device **105** or the keyboard **104.**
      - Then the spreadsheet user invokes a specific command called ***"Persistent_Paste"*** thanks to conventional means available in spreadsheet environment, such as (but not limited to) dedicated push-buttons, keyboard entry short cuts, menu or sub menu entries. In a preferred embodiment of the present invention, the ***Persistent_Paste*** command is invoked by clicking with the pointing device **105** first on the conventional "Paste Special" menu entry **502** within the conventional "Edit" menu **500 ,** as shown in FIG **5A,** then on a specific check box **521** "Persistent Paste" introduced within the conventional "Paste Special" dialog box **520,** as shown in FIG **5C** and then on the "OK" push-button **522** available within this same dialog box "Paste Special" **510.** At completion of the Persistent_Paste command, the background pattern of the destination ranges of cells is set to the value PATTERN_PASTE, reflecting that they are now persistently cloned ranges of cells.
   - Inversely, a regular copy-paste operation is performed between the source range of cells and the single or multiple destination ranges of cells.
- The second step occurs when the spreadsheet user updates or deletes a cell belonging either to a persistently cloned range of cells or to a persistently clonable range of cells:
   - If the spreadsheet user updates the content of a cell belonging to a persistently clonable range of cells, the improved copy-paste manager invokes by itself a specific commend called ***"Auto_Persistent_Copy_Paste"*** which automatically reflects this update in all the persistently cloned ranges of cells associated with the updated persistently clonable range of cells. This ***"Auto_Persistent_Copy_Paste"*** operation is fully automated, without involvement of the spreadsheet user, and is itself based on a copy-paste operation applied by the improved copy-paste manager between the updated persistently clonable range of cells and all the associated persistently cloned ranges of cells.
   - If the spreadsheet user updates the content of a cell belonging to a persistently cloned range of cells, the improved copy-paste manager invokes by itself a specific command called ***"Break_Paste"*** which breaks the relationship previously established between this range of cells and the persistently clonable range of cells it is derived from. As a result, the background pattern of the updated range of cells is reset to its initial value, and any future change of the persistently clonable range of cells will no longer be reflected in the current range of cells. Furthermore if the updated range of cell was the last persistently cloned range of cell associated to the persistently clonable range of cells, then this clonable range of cells resumes to its initial state (it is no longer a clonable range of cells) so that its background pattern is reset to its initial value.
   - If the spreadsheet user deletes a cell belonging to a persistently clonable range of cells, the improved copy-paste manager invokes by itself a specific command called ***"Break_Copy"*** which breaks the relationship previously established between this range of cells and all the persistently cloned ranges of cells derived from it. As a result, the background pattern of the updated range of cells and of all the previously associated persistently cloned ranges of cells are reset to their initial values, and any future change of the current range of cells will no longer be reflected in the previously associated persistently cloned ranges of cells.
   - If the spreadsheet user deletes a cell belonging to a persistently cloned range of cells, the improved copy-paste manager invokes by itself the command ***"Break_Paste"*** which breaks the relationship previously established between this range of cells and the persistently clonable range of cells it is derived from. As a result, the background pattern of the updated range of cells is reset to its initial value, and any future change of the persistently clonable range of cells will no longer be reflected in the current range of cells. Furthermore if the deleted range of cell was the last persistently cloned range of cell associated to the persistently clonable range of cells, then this clonable range of cells resumes to its initial state (it is no longer a clonable range of cells) so that its background pattern is reset to its initial value.

### E. Persistent Copy-Paste Table

The decision to perform a persistent copy-paste operation between a source reference range of cells and one or multiple destination ranges of cells belong to the spreadsheet user. When this operation occurs, a common repository, called *the "Persistent Copy-Paste Table",* is used to record the data required by this operation. This Persistent Copy-Paste Table is preferably saved on a non volatile memory (typically but not necessary as part of the spreadsheet disk file on the mass storage **107**)

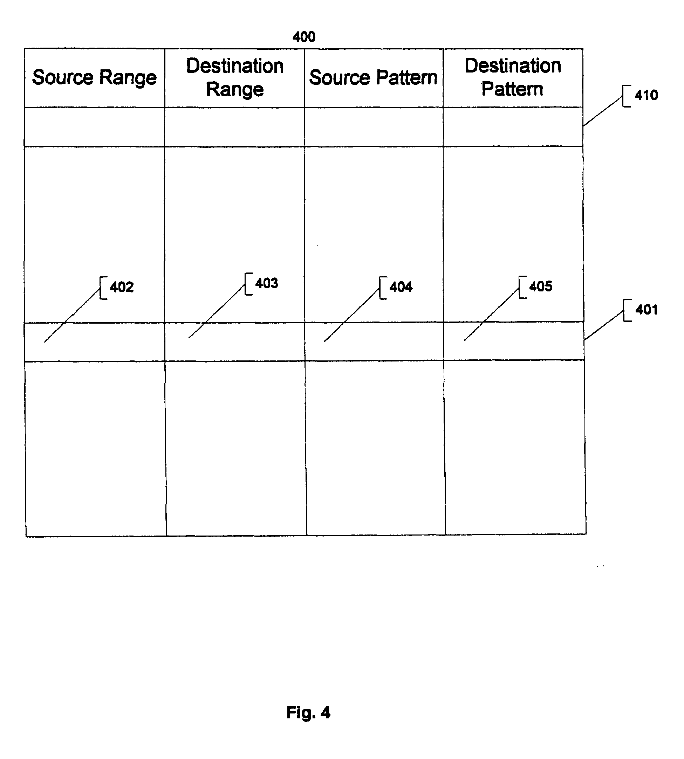

Referring now to FIG. **4,** the Persistent Copy-Paste Table **400** corresponds to a logical simple structure made of several records **401,** each of them resulting from a persistent copy-paste operation. Each record includes four fields:
- The *"Source Range"* **402** field is used for identifying uniquely the source reference range of cells within the spreadsheet. For instance, the Source Range can correspond to the conventional address structure Sheet:RowColumn..Sheet:RowColumn associated to every range of cells (For example D:E10..D:G20 with D as Sheet name, E and G as Row name/number, 10 and 20 as Column name/number).
- The *"Destination Range"* **403** field is used for identifying uniquely the destination range of cells within the spreadsheet. For instance, the Destination Range can correspond to the conventional address structure Sheet:RowColumn..Sheet:RowColumn associated to every range of cells.
- The *"Source Pattern"* field **404** records the pattern of the source reference range of cells, before execution of the persistent copy-paste operation.
- The *"Destination Pattern"* field **405** records the pattern of the destination range of cells, before execution of the persistent copy-paste operation.

The record **410** located at the beginning of the Persistent Copy-Paste Table **400** is referred to as the top record.

In the preferred embodiment, the Persistent Copy-Paste Table **400** is explicitly included within the spreadsheet file itself, but other obvious implementations can be used instead.

### F. Methods

### F.1 Persistent_Copy Method

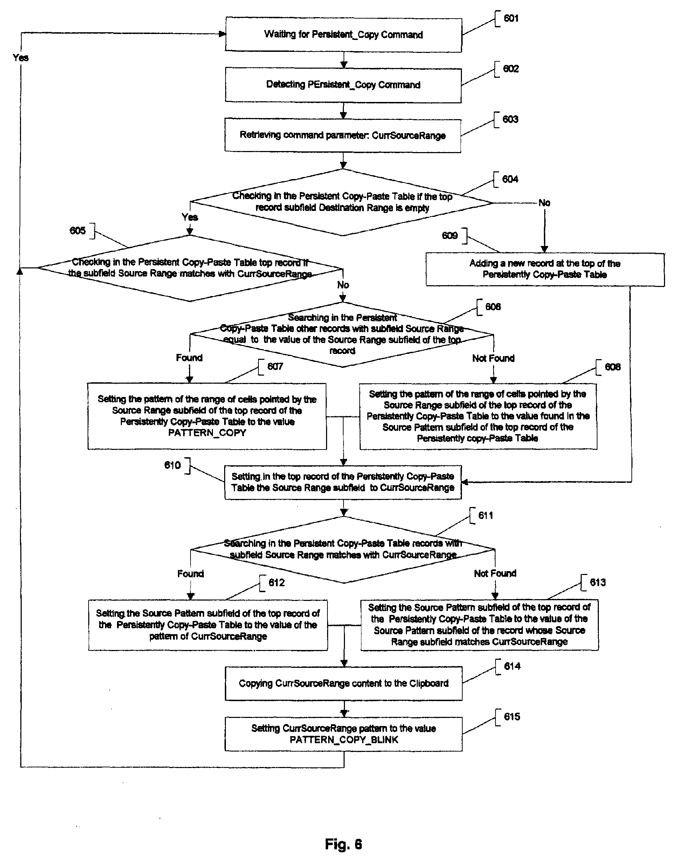

The method for turning a given range of cells into a persistently clonable range of cells to take advantage of the present invention is summarised in flowchart **600** of FIG **6**. This method can be seen as the processing of the **"*Persistent_Copy*"** command. The method comprises the following steps :
- At step **601,** the method is in its default state, waiting for an event to initiate the process.
- At step **602,** an event is detected, as a result of a user action. This action can be for instance a specific combination of key on the keyboard **104,** or the click of the pointing device **105** on a specific button, or any other similar means not further specified here.
- At step **603,** the source reference range of cells, considered as a parameter of the ***Persistent_Copy*** command, is retrieved under the name CurrSourceRange.
- At step **604,** the method checks if the *"Destination Range"* subfield **403** within the top record **410** of the Persistent Copy-Paste Table **400** is either void or filled with a specific value. If found void, then control is given to step **605;** otherwise control is given to step **609.**
- At step **605,** the method checks if the *"Source Range"* subfield **402** within the top record **410** of the Persistent Copy-Paste Table **400** matches with the range of cells named CurrSourceRange. If it is the case, then it means that the current ***Persistent_Copy*** command is just a "replay" of the previous ***Persistent_Copy*** command so that control is given back to the initial step **601** for waiting for a new ***Persistent_Copy*** command to treat. Otherwise control is given to step **606.**
- At step **606,** the method checks if there is any other record **401** within the Persistent Copy-Paste Table **400** whose *"Source Range"* subfield **402** matches with the value of the *"Source Range"* subfield **402** of the top record **410** of the Persistent Copy-Paste Table **400.** If it is the case, then control is given to step **607;** otherwise control is given to step **608.**
- At step **607,** the background pattern of the range of cells pointed by the *"Source Range"* subfield **402** of the top record **410** of the Persistently Copy-Paste Table **400** is set to the value PATTERN_COPY. Then control is given to step **610.**
- At step **608,** the background pattern of the range of cells pointed by the *"Source Range"* subfield **402** of the top record **410** of the Persistently Copy-Paste Table **400** is set to the value found in the *"Source Pattern"* subfield **404** of the top record **410** of the Persistently copy-Paste Table **400.** Then control is given to step **610.**
- At step **609,** the Persistent Copy-Paste Table **400** is extended by introducing a new record **401** which becomes the top record **410** of this table.
- At step **610,** the *"Source Range"* subfield **402** of the top record **410** of the Persistent Copy-Paste Table **400** is set to the address of the range of cells named CurrSourceRange.
- At step **611,** the method checks if there is any record **401** within the Persistent Copy-Paste Table **400** whose *"Source Range"* subfield **402** matches with the address of the range of cells named CurrSourceRange. If it is the case, then control is given to step **613;** otherwise control is given to step **612.**
- At step **612,** the *"Source Pattern"* subfield **404** of the top record **410** of the Persistent Copy-Paste Table **400** is set to the value of the background pattern of the range of cells named CurrSourceRange. Then control is given to step **614.**
- At step **613,** the *"Source Pattern"* subfield **404** of the top record **410** of the Persistent Copy-Paste Table **400** is set to the value of the *"Source Pattern"* subfield **404** of the record **401** found at step **611** where the *"Source Range"* subfield **402** matched with the address of the range of cells named CurrSourceRange.
- At step **614,** the content of the range of cells named CurrSourceRange is copied to the clipboard.
- At step **615,** the background pattern of the range of cells named CurrSourceRange is set to the value PATTERN_COPY_BLINK.
- At step **616,** the ***Persistent_Paste*** command is enabled. In a preferred embodiment of the present invention, this would mean to enable the "Persistent Paste" check mark **521** within the Paste Special dialog box **520**. Then control is given back to the initial step **601** for handling a new command.

### F.2. Persistent_Paste method

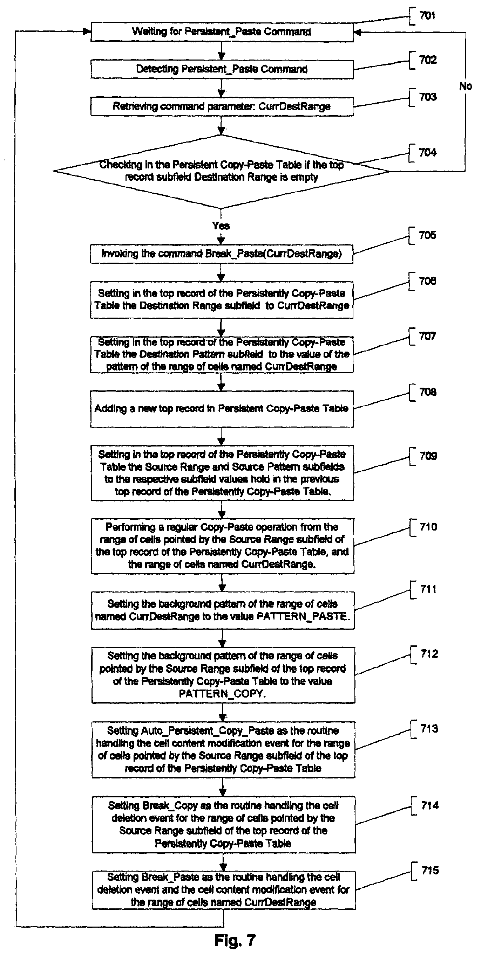

The method for turning a given range of cells into a persistently cloned range of cells to take advantage of the present invention is summarised in flowchart **700** of FIG **7**. This method can be seen as the processing of the ***"Persistent_Paste*"** command. The method comprises the following steps :
- At step **701,** the method is in its default state, waiting for an event to initiate the process.
- At step **702,** an event is detected, as a result of a user action. This action can be for instance a specific combination of key on the keyboard **104**, or the click of the pointing device **105** on a specific button, or any other similar means not further specified here.
- At step **703,** the destination range of cells, considered as a parameter of the ***Persistent_Paste*** command, is retrieved under the name CurrDestRange.
- At step **704,** the method checks if the *"Destination Range"* subfield **403** within the top record **410** of the Persistent Copy-Paste Table **400** is either void or filled with a specific value. If found void, then control is given to step **705**; otherwise control is given back to the initial step **701** for handling a new command. Indeed the absence of a top record **410** with an empty *"Destination Range"* subfield **403** should not occur when the ***Persistent_Paste*** command is enabled.
- At step **705,** the command ***Break_Paste*** is invoked with CurrDestRange as parameter. This invocation allows to delete from the Persistent Copy-Paste table **400** any existing record **401** where the *"Destination Range"* subfield **403** corresponds to CurrDestRange.
- At step **706,** the *"Destination Range"* subfield **403** within the top record **410** of the Persistent Copy-Paste Table **400** is set to the address of the range of cells named CurrDestRange.
- At step **707,** the *"Destination Pattern"* subfield **405** of the top record **410** of the Persistent Copy-Paste Table **400** is set to the value of the background pattern of the range of cells named CurrDestRange.
- At step **708,** the Persistent Copy-Paste Table **400** is extended by introducing a new record **401** which becomes the top record **410** of this table.
- At step **709,** the *"Source Range"* subfield **402** and the *"Source Pattern"* subfield **404** of the new top record **410** of the Persistently Copy-Paste Table **400** are set to the respective values found in the same subfields of the record **401** which was the top record **410** of the Persistent Copy-Paste Table **400** before step **708.**
- At step **710,** a regular Copy-Paste operation is performed from the range of cells pointed by the *"Source Range"* subfield **402** of the top record **410** of the Persistently Copy-Paste Table **400,** and the range of cells named CurrDestRange.
- At step **711,** the background pattern of the range of cells named CurrDestRange is set to the value PATTERN_PASTE.
- At step **712,** the background pattern of the range of cells pointed by the *"Source Range"* subfield **402** of the top record **410** of the Persistently Copy-Paste Table **400** is set to the value PATTERN_COPY.
- At step **713,** the ***Auto_Persistent_Copy_Paste*** method is set as the routine handling the cell content modification event for the range of cells pointed by the *"Source Range"* subfield **402** of the top record **410** of the Persistently Copy-Paste Table **400.**
- At step **714,** the ***Break_Copy*** method is set as the routine handling the cell deletion event for the range of cells pointed by the *"Source Range"* subfield **402** of the top record **410** of the Persistently Copy-Paste Table **400.**
- At step **715,** the ***Break_Paste*** method is set as the routine handling the cell deletion event and the cell content modification event for the range of cells named CurrDestRange

### F.3. Auto_Persistent_Copy_Paste method

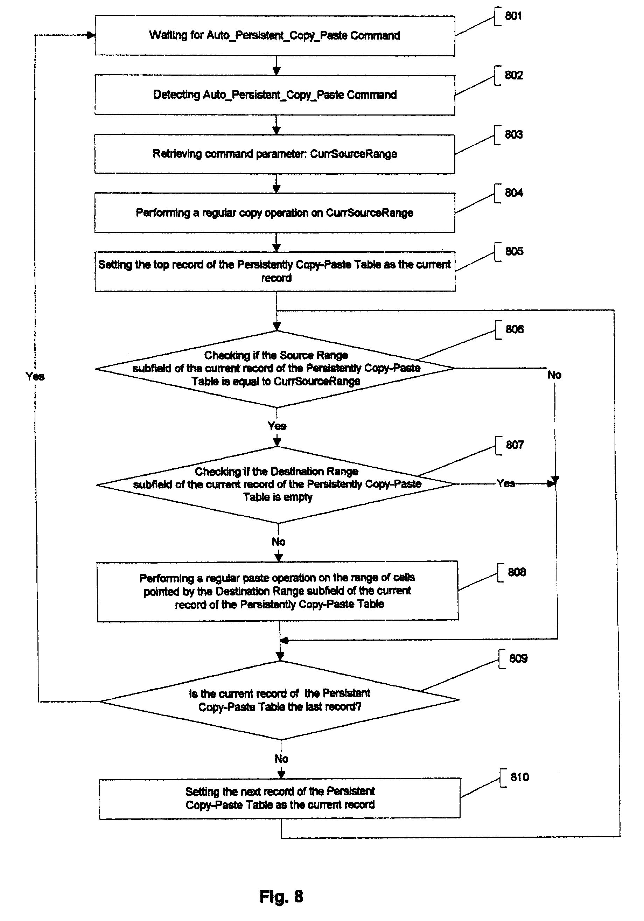

The method for automatically reflecting an update of the content of a persistently clonable range of cells onto one or multiple persistently cloned ranges of cells to take advantage of the present invention is summarised in flowchart **800** of FIG **8.** This method can be seen as the processing of the ***"Auto_Persistent_Copy_Paste"*** command which is invoked each time the content of a persistently clonable range of cells is changed, as outlined in the step **713** of the ***Persistent Paste*** method. The method comprises the following steps :
- At step **801,** the method is in its default state, waiting for an event to initiate the process.
- At step **802,** an event is detected, as a result of a persistently clonable range of cells content update.
- At step **803,** the updated persistently clonable range of cells, considered as a parameter of the ***Auto_Persistent_Copy_Paste*** command, is retrieved under the name CurrSourceRange.
- At step **804,** a regular copy operation is performed on the range of cells named CurrSourceRange
- At step **805,** the top record **410** of the Persistently Copy-Paste Table **400** is set as the current record **401** of the table.
- At step **806,** the *"Source Range"* subfield **402** of the current record **401** of the Persistently Copy-Paste Table **400** is compared against CurrSourceRange. If found equal, then control is given to step **807 ;** otherwise control is given to step **809.**
- At step **807,** the method checks if the "*Destination Range"* subfield **403** of the current record **401** of the Persistently Copy-Paste Table **400** is empty. If it is the case, then control is given to step **809 ;** otherwise control is given to step **808.**
- At step **808,** a regular paste operation is performed on the range of cells pointed by the *"Destination Range"* subfield **403** of the current record **401** of the Persistently Copy-Paste Table **400.**
- At step **809,** a test is performed to check if the current record **401** of the Persistent Copy-Paste Table **400** is in fact the last record of this table. If it is the case, then control is given to the initial step **801** for handling any new future command ; otherwise control is given to step **810.**
- At step **810,** the next record of the Persistent Copy-Paste Table **400** is set as the new current record **401** of this table. Then control is given to step **806.**

### F.4. Break_Copy method

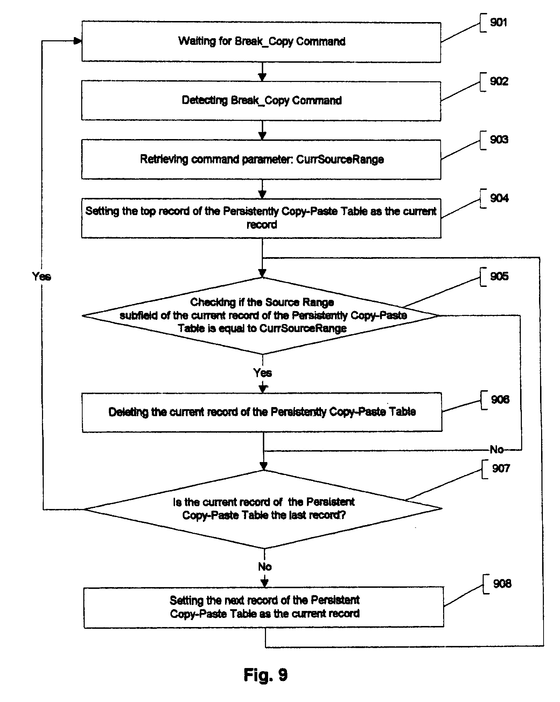

The method for automatically reflecting the deletion of a persistently clonable range of cells to take advantage of the present invention is summarised in flowchart **900** of FIG **9.** This method can be seen as the processing of the ***"Break_Copy"*** command which is invoked each time a persistently clonable range of cells is deleted, as outlined in the step **714** of the ***Persistent_Paste*** method. The method comprises the following steps :
- At step **901,** the method is in its default state, waiting for an event to initiate the process.
- At step **902,** an event is detected, as a result of a persistently clonable range of cells deletion.
- At step **903,** the deleted persistently clonable range of cells, considered as a parameter of the ***Break_Copy*** command, is retrieved under the name CurrSourceRange.
- At step **904,** the top record **410** of the Persistently Copy-Paste Table **400** is set as the current record **401** of the table.
- At step **905,** the *"Source Range"* subfield **402** of the current record **401** of the Persistently Copy-Paste Table **400** is compared against CurrSourceRange. If found equal, then control is given to step **906 ;** otherwise control is given to step **907.**
- At step **906,** the current record **401** of the Persistently Copy-Paste Table **400** is deleted. If it was not the first record of the table, then its previous record becomes automatically the new current record **401;** otherwise its following record becomes automatically the new current record **401.**
- At step **907,** a test is performed to check if the current record **401** of the Persistent Copy-Paste Table **400** is in fact the last record of this table. If it is the case, then control is given to the initial step **901** for handling any new future command ; otherwise control is given to step **908.**
- At step **908,** the next record of the Persistent Copy-Paste Table **400** is set as the new current record **401** of this table. Then control is given to step **905.**

### F.5. Break_Paste method

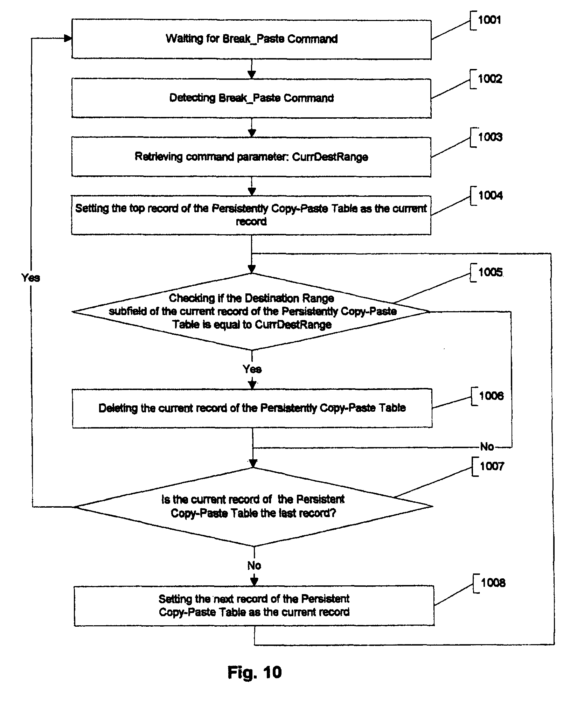

The method for automatically reflecting the deletion or the content update of a persistently cloned range of cells to take advantage of the present invention is summarised in flowchart **1000** of FIG **10.** This method can be seen as the processing of the ***"Break_Paste"*** command which is invoked each time a persistently cloned range of cells is either deleted or content changed, as outlined in the step **715** of the ***Persistent_Paste*** method. The method comprises the following steps :
- At step **1001,** the method is in its default state, waiting for an event to initiate the process.
- At step **1002,** an event is detected, as a result of a persistently cloned range of cells deletion or content update.
- At step **1003,** the deleted or updated persistently cloned range of cells, considered as a parameter of the ***Break_Paste*** command, is retrieved under the name CurrDestRange.
- At step **1004,** the top record **410** of the Persistently Copy-Paste Table **400** is set as the current record **401** of the table.
- At step **1005,** the *"Destination Range"* subfield **403** of the current record **401** of the Persistently Copy-Paste Table **400** is compared against CurrDestRange. If found equal, then control is given to step **1006 ;** otherwise control is given to step **1007.**
- At step **1006,** the current record **401** of the Persistently Copy-Paste Table **400** is deleted. If it was not the first record of the table, then its previous record becomes automatically the new current record **401;** otherwise its following record becomes automatically the new current record **401.**
- At step **1007,** a test is performed to check if the current record **401** of the Persistent Copy-Paste Table **400** is in fact the last record of this table. If it is the case, then control is given to the initial step **1001** for handling any new future command ; otherwise control is given to step **1008.**
- At step **1008,** the next record of the Persistent Copy-Paste Table **400** is set as the new current record **401** of this table. Then control is given to step **1005.**

### ALTERNATE EMBODIMENTS

While the invention has been particularly shown and described with reference to a preferred embodiment, it will be understood that various changes in form and detail may be made therein without departing from the spirit, and scope of the invention.

The Persistent Copy-Paste method and system according to the present invention may be used advantageously in those environments where elements of information are organised as multidimensional tables having more than three dimensions.

## Claims

1. Method for persistently copying and pasting a source range of cells onto one or multiple destination ranges of cells, in a multi dimensional spreadsheet comprising a plurality of cells identified by a cell address along each dimension, a range of cells comprising one or a plurality of cells, the method comprising the steps of:
• performing a persistent copy operation, said operation comprising the steps of:
• selecting a source range of cells;
• copying the source reference range of cells onto a buffer;
• performing a persistent paste operation, said operation comprising the steps of:
• selecting one or a plurality destination range of cells;
for each selected destination range of cells:
• copying the content of said buffer onto the selected destination range of cells;
• associating the source range of cells with the destination range of cells;
• automatically performing a copy operation each time the source range of cells is updated, said operation comprising the steps of:
• determining whether the source range of cells is associated with one or a plurality of destination range of cells;
If the source range of cells is associated with one or a plurality of destination range of cells:
• copying the source range of cells onto the one or plurality of associated destination range of cells.

2. The method according to the preceding claim wherein said step of copying the source range of cells onto a buffer comprises the further steps of:
• associating a first variable (404) with said source range of cells;
• setting said first variable (404) to a first value.

3. The method according to any one of the preceding claims wherein said step of associating a first variable (404) with said source range of cells comprises the further steps of:
• storing in a table (400) means (402), preferably an address or a name, for identifying said source range of cells;
• associating in said table said first variable (404) with said means (402) for identifying said source range of cells;

4. The method according to any one of the preceding claims wherein said step of associating the source range of cells with the destination range of cells, comprises the further steps of:
• setting the first variable (404) associated to the source range of cells to a second value;
• associating a second variable (405) with said destination reference range of cells;
• setting the second variable (405) associated to the destination range of cells to a third value;
• associating the first variable associated with the source range of cells with the second variable associated with the destination range of cells.

5. The method according to the preceding claim wherein said step of associating a second variable (405) with said destination reference range of cells comprises the further steps of:
• storing in the table (400) means (403), preferably an address or a name, for identifying said destination reference range of cells;
• associating in said table said second variable (405) with said means (403) for identifying said source reference range of cells.

6. The method according to the preceding claim wherein said step of determining whether the source range of cells is associated with one or a plurality of destination range of cells comprises the further step of:
• determining in said table whether said means for identifying the source range of cells is associated with means for identifying one or a plurality of destination range of cells.

7. The method according to any one of the preceding claims wherein the step of setting a value to a variable associated with a range of cells comprise the further step of:
• displaying the range of cells according to the value of said variable.

8. The method according to any one of the preceding claims wherein the step of performing a persistent copy operation comprises the further step of :
• invoking a persistent copy command.
and wherein the step of performing a persistent paste operation comprises the further step of :
• invoking a persistent paste command.

9. A system comprising means adapted for carrying out the method according to any one of the preceding claims.

10. A computer program comprising instructions adapted for carrying out the method according to claims 1 to 8.
